# EUROPÄISCHE PATENTSCHRIFT

(11) **EP 0 585 584 B1**
(45) Veröffentlichungstag und Bekanntmachung des Hinweises auf die Patenterteilung: **11.09.1996**
(21) Anmeldenummer: 93111492.0
(22) Anmeldetag: 17.07.1993
(51) Int. Cl.: B62D 65/00, B23K 37/04

(54) **Bearbeitungsstation für Fahrzeugkarosserien in einer Transferlinie**
Machining station for vehicle bodywork within a production line
Station d'usinage pour carrosseries de véhicules dans une chaîne de production

(30) Priorität: 02.09.1992 DE 9211841 U
(43) Veröffentlichungstag der Anmeldung: 09.03.1994
(73) Patentinhaber: KUKA Schweissanlagen & Roboter GmbH, D-86165 Augsburg (DE)
(72) Erfinder: Weihmayr, Josef, D-86465 Welden-Reutern (DE)
(74) Vertreter: Ernicke, Hans-Dieter, Dipl.-Ing.

(56) Entgegenhaltungen:
- EP-A- 0 147 910
- DE-C- 3 720 175
- DE-C- 3 823 947
- DE-U- 8 812 396
- GB-A- 2 172 555

## Beschreibung

Die Erfindung betrifft eine Bearbeitungsstation für Fahrzeugkarosserien in einer Transferlinie mit dem Merkmal im Oberbegriff des Hauptanspruchs.

Eine solche Bearbeitungsstation ist aus der GB-A 2 172 555 bekannt. Beidseits der Transferlinie sind hier aus Robotern bestehende Bearbeitungsvorrichtungen angeordnet, die links und rechts von jeweils einer Zustellvorrichtung für die Spannrahmen flankiert sind. Die insgesamt vier Zustellvorrichtungen bestehen aus schwenkbaren Rahmenträgern, die aus mehreren Magazinen Spannrahmen entnehmen und dorthin wieder abgeben können. Die Magazine sind im Viertelkreis um die Schwenkachse der Zustellvorrichtungen angeordnet. Die Zustellvorrichtungen sind jeweils mit Abstand seitlich neben den Robotern bzw. Bearbeitungsvorrichtungen angeordnet. Sie schieben die Spannrahmen längs der Transferlinie auf einer Schiene in die Arbeitsposition vor die Roboter.

Eine andere Bearbeitungsstation ist aus der DE-U 88 12 396.0 bekannt. Die Zustellvorrichtung besteht hier aus einem schweren U-förmigen Rahmen, der portalartig an einem Maschinengestell aufgehängt und verfahrbar gelagert ist. Für die Zustellvorrichtung ist ein entsprechend kräftiger Antrieb erforderlich. Hinter jeder Zustellvorrichtung ist zudem ein Magazin für mehrere Spannrahmen in Form einer liegenden Trommel angeordnet. Bei der bekannten Bearbeitungsstation können im Bodenbereich seitlich der Transferlinie keine Bearbeitungsvorrichtungen, z.B. Schweißroboter oder dergleichen, angeordnet sein. Die Schweißroboter befinden sich oberhalb der Transferlinie bzw. Arbeitsstelle und sind als Portalroboter ausgebildet. Durch die hängende Betriebsweise ist der Arbeitsbereich eingeschränkt.

Aus der DE-C 37 20 175 ist eine andere Bearbeitungsvorrichtung bekannt, bei der die Zustellvorrichtung als Verschiebeplattform ausgebildet ist. Auf der Verschiebeplattform finden zwei Schweißroboter Platz, die von der Zustellvorrichtung mitbewegt werden. Entsprechend massiv müssen die Plattform und der Antrieb der Zustellvorrichtung ausgebildet sein. Die Spannrahmen werden von einen portalartigen Ständer aufgenommen, der auf dem vorderen Rand der Verschiebeplattform angeordnet ist. Für die Bevorratung verschiedener Spannrahmentypen ist ein Magazin vorgesehen, das aus mehreren in Reihe hintereinander angeordneten Schiebeführungen zur Aufnahme jeweils eines einzelnen Spannrahmens besteht. Zum Rahmenwechsel fährt die Zustellvorrichtung die gewünschte Schiebeführung an. Bei der bekannten Bearbeitungsvorrichtung ist die seitliche Zugänglichkeit der Fahrzeugkarosserie an der Arbeitsstelle verbessert, was allerdings auch ein Mitbewegen der Schweißroboter und eine entsprechende Auslegung der Zustellvorrichtung bedingt.

Aus der DE-A 38 23 947 ist ebenfalls eine Bearbeitungsstation mit einer Zustellvorrichtung bekannt, welche eine Verschiebeplattform und einen Portalrahmen aufweist. Im einen Ausführungsbeispiel werden die Schweißroboter mitbewegt, im anderen sind sie auf einer Arbeitsbühne gelagert, wobei die Verschiebeplattform einen entsprechenden Ausschnitt aufweist. Die Magazine für die Spannrahmen sind über und unter der Arbeitsstelle angeordnet und werden durch einen vertikalen Hubschlitten transportiert. Die Arbeitsstelle befindet sich auf einer angehobenen Arbeitsbühne.

Es ist Aufgabe der vorliegenden Erfindung, eine Bearbeitungsstation aufzuzeigen, die möglichst viel Freiraum an der Arbeitsstelle bietet und eine weniger bauaufwendige Zustellvorrichtung besitzt.

Die Erfindung löst diese Aufgabe mit den Mermalen im Hauptanspruch.
Die Zustellvorrichtung besteht aus mehreren, vorzugsweise zwei eigenständigen und mit eigenen Antrieben versehenen Zustellschlitten. Auf eine aufwendige Portalkonstruktion kann hierdurch verzichtet werden, was Gewicht spart und kleinere Antriebe ermöglicht. Im bevorzugten Ausführungsbeispiel sind die Zustellschlitten untereinander nicht mechanisch gekoppelt und werden erst durch den Spannrahmen miteinander verbunden. Durch die getrennten Zustellschlitten ist Platz und viel Bewegungsfreiraum für eine bodenständige Bearbeitungsvorrichtung, vorzugsweise ein oder zwei Schweißroboter. Durch die eigenständigen Zustellschlitten und das entfallende Portal ist die freie Zugänglichkeit der Arbeitsstelle bzw. der Fahrzeugkarosserie verbessert.

Bei der Zustellbewegung muß kein absoluter Gleichlauf der Zustellschlitten gewährleistet sein. Schrägstellungen des Spannrahmens sind tolerierbar. An der Arbeitsstelle wird der Spannrahmen durch eine Stütze und eine Zentriervorrichtung genau positioniert. Für die Zustellbewegung genügt es, die Antriebe der Zustellschlitten gleich auszubilden und gleichzeitig einzuschalten. Wenn man Abweichungen im Gleichlauf nicht tolerieren will, können die Antriebe elektrisch gekoppelt oder synchronisiert sein.

In der erfindungsgemäßen Bearbeitungsstation kann ein Magazin für Spannrahmen angeordnet sein, was aber nicht sein muß. In der bevorzugten Ausführungsform ist das Magazin als Hubportal mit Hubschlitten für vorzugsweise zwei Spannrahmen ausgebildet. Hierdurch wird die freie Zugänglichkeit der Arbeitsstelle nicht beeinträchtigt. Außerdem sind schnellere Rahmenwechsel möglich.

Es empfiehlt sich, die Zustellschlitten auf einem Gestell mit Distanz über dem Boden und dabei auch über dem Sockel der Bearbeitungsvorrichtung anzuordnen. In Verbindung mit dem Magazin bietet dies den Vorteil, daß der untere magazinierte Spannrahmen sich in Ruhestellung vor dem Gestell befinden kann und die Zustellschlitten darüber ungehindert den zweiten Spannrahmen verschieben können.

Bei der erfindungsgemäßen Bearbeitungsstation ist der Raum über der Transferlinie bzw. der Arbeitsstelle frei. Wenn eine Zuführung von Karosserieteilen an die Arbeitsstelle, insbesondere von Karosserieseitenteilen, erwünscht ist, kann dies durch eine Transportvorrichtung von oben her geschehen. Die Seitenteile werden dann direkt zur Arbeitsstelle gebracht und dort von dem Spannrahmen übernommen. Die Spannrahmen müssen dazu nicht von der Arbeitsstelle wegbewegt oder gewechselt werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen
- Fig. 1 bis 3:: eine Bearbeitungsstation in Stirnansicht, Seitenansicht und Draufsicht,
- Fig. 4:: einen Zustellschlitten in Seitenansicht und
- Fig. 5:: eine abgebrochene Draufsicht auf den Zustellschlitten von Figur 4.

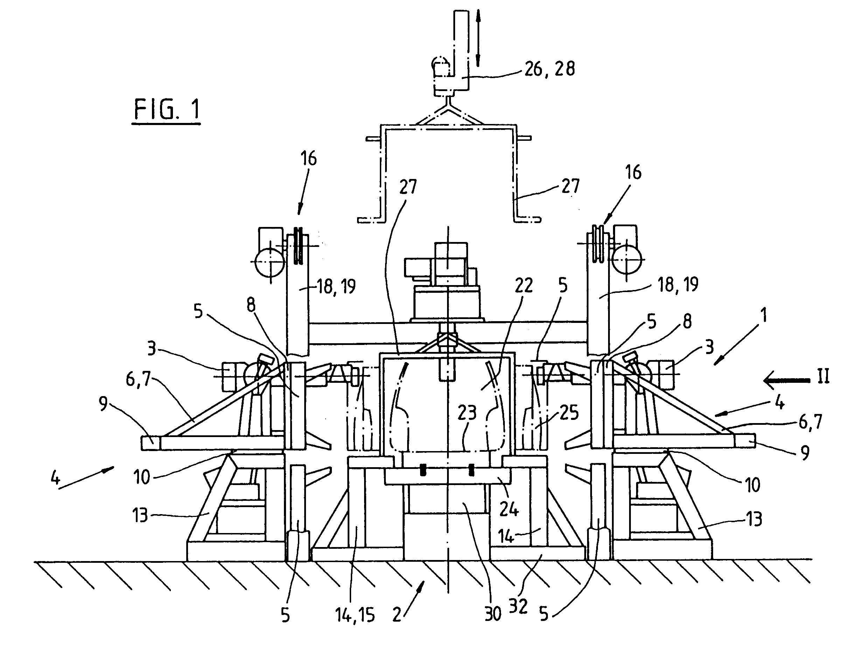

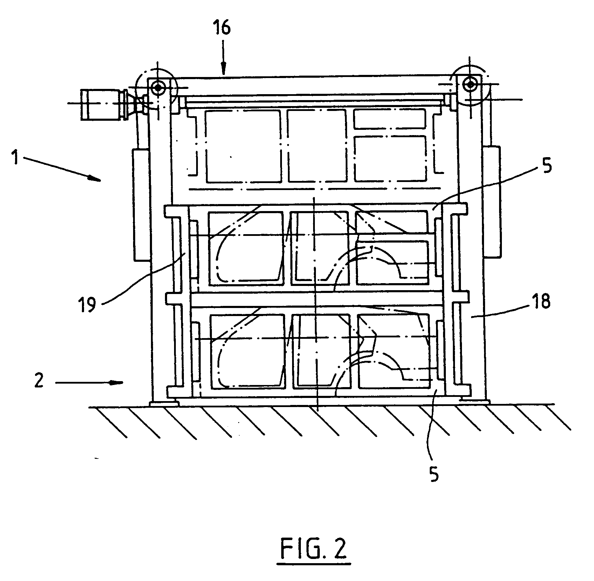

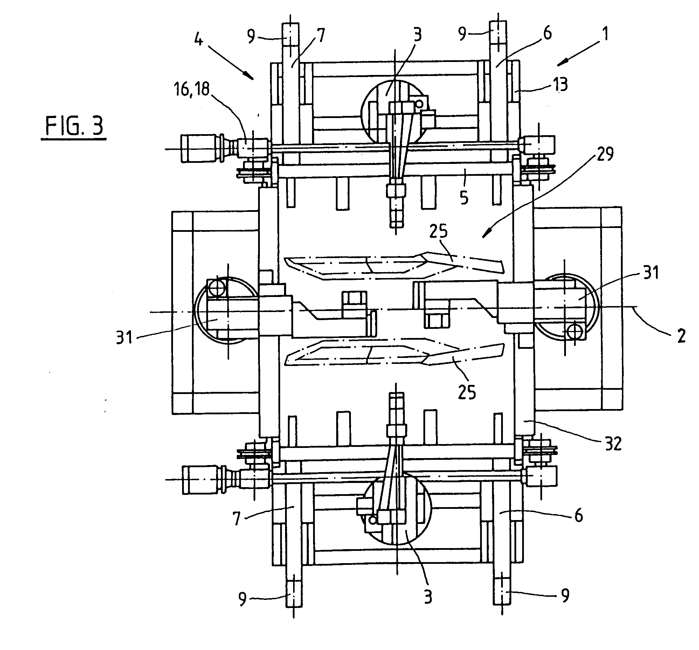

In Fig. 1 bis 3 ist eine Bearbeitungsstation (1) in einer Transferlinie (2) zur Bearbeitung von Fahrzeugkarosserien (22) dargestellt. Fig. 1 zeigt die Bearbeitungsstation 1 in der Stirnansicht längs der Transferlinie (2). Fig. 2 verdeutlicht die Seitenansicht gemäß Pfeil II von Fig. 1. Fig. 3 gibt die Draufsicht wieder.

Die Bearbeitungsstation (1) ist im gezeigten Ausführungsbeispiel als Schweißstation zum Heften, Nachschweißen oder Fertigschweißen einer Fahrzeugkarosserie (22) ausgebildet. Auf einem geeigneten Förderer (30) wird das Bodenteil (23) der Karosserie (22) auf einer Palette (24) längs der Transferlinie (2) in die Bearbeitungsstation (1) gebracht und dort mit Karosserie-Seitenteilen (25) verschweißt. Die Seitenteile (25) können auf der Palette (24) mitgeführt oder separat über eine später näher beschriebene Transportvorrichtung (26) zugeführt werden.

Zum Halten und Spannen der Seitenteile (25) sind Spannrahmen (5) mit Werkzeugen vorgesehen, die an den jeweiligen Karosserietyp angepaßt sind. Die Spannrahmen (5) werden jeweils durch eine Zustellvorrichtung (4) zur Arbeitsstelle (29) gebracht und nach Beendigung des Arbeitsablaufes und zum Einfahren der nächsten Karosserie (22) wieder zurückgezogen.

Im gezeigten Ausführungsbeispiel sind auf beiden Seiten der Transferlinie (2) jeweils eine Zustellvorrichtung (4) sowie ein Magazin (16) zur Bevorratung von zwei verschiedenen Spannrahmentypen (5) angeordnet. Beidseits der Transferlinie (2) befindet sich auch jeweils eine Bearbeitungsvorrichtung (3), hier in Form von ein oder zwei Schweißrobotern. Zusätzlich können auf dem Stationsgestell (32) ein oder zwei Konsolroboter (31) angeordnet sein (vgl. Fig. 3), die von oben arbeiten. In Abwandlung von dem gezeigten Ausführungsbeispiel können die Bearbeitungsvorrichtung (3), die Zustellvorrichtung (4) und das Magazin (16) auch nur auf einer Seite der Transferlinie (2) angeordnet sein. In einer weiteren Abwandlung kann das Magazin (16) auch entfallen, wenn nur ein Karosserietyp bearbeitet wird und dementsprechend nur jeweils ein Spannrahmentyp (5) benötigt wird.

Wie Fig. 1 bis 5 verdeutlichen, besteht die Zustellvorrichtung (4) aus zwei mit Abstand und getrennt voneinander angeordneten Zustellschlitten (6,7), die jeweils einen eigenen Antrieb (9) haben. Die Zustellschlitten (6,7) bewegen sich auf horizontalen Führungen (10) quer zur Transferlinie (2). Sie sind unabhängig voneinander verfahrbar. Die Antriebe (9) werden für die Zustellbewegungen gleichzeitig von der Maschinensteuerung eingeschaltet. Alternativ können die üblicherweise als Elektromotoren ausgebildeten Antriebe (9) elektrisch gekoppelt oder synchronisiert sein.

Wie Fig. 3 in der Draufsicht am besten verdeutlicht, sind die Zustellschlitten (6,7) beidseits der Bearbeitungsvorrichtung (3) angeordnet und relativ zu dieser verfahrbar. Die Bearbeitungsvorrichtung (3) steht ortsfest am Boden oder auf einem bodenseitigen Gestell. Sie kann auch eine von der Zustellvorrichtung unabhängige zusätzliche Fahrachse besitzen.

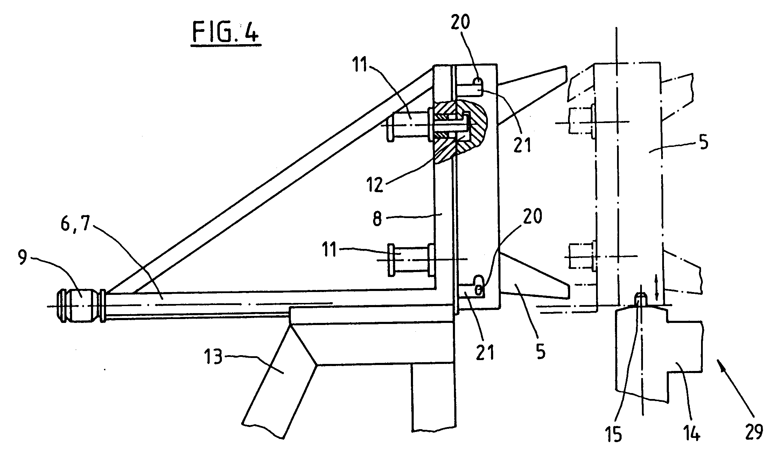

Die beiden Zustellschlitten (6,7) sind in Betriebsstellung nur durch den Spannrahmen (5) miteinander verbunden. Die Zustellschlitten (6,7) sind beispielsweise als Strebenkonstruktion ausgebildet und besitzen jeweils eine vertikale Tragsäule (8), an der über eine Spannvorrichtung (11) der Spannrahmen (5) lösbar gehalten ist. Die Spannvorrichtung (11) weist einen angetriebenen hakenartigen Bolzen auf, der horizontal in eine hinterschnittene Nut (12) am Spannrahmen (5) greift. Fig. 4 zeigt die Verriegelungsstellung.

Die Zustellschlitten (6,7) sind jeweils auf einem Gestell (13) verfahrbar gelagert. Zwischen dem Gestell (13) und der horizontalen Schlittenstrebe ist die Führung (10) angeordnet. Der Antrieb erfolgt beispielsweise über eine Zahnstange, ein Schneckengetriebe oder dergleichen.

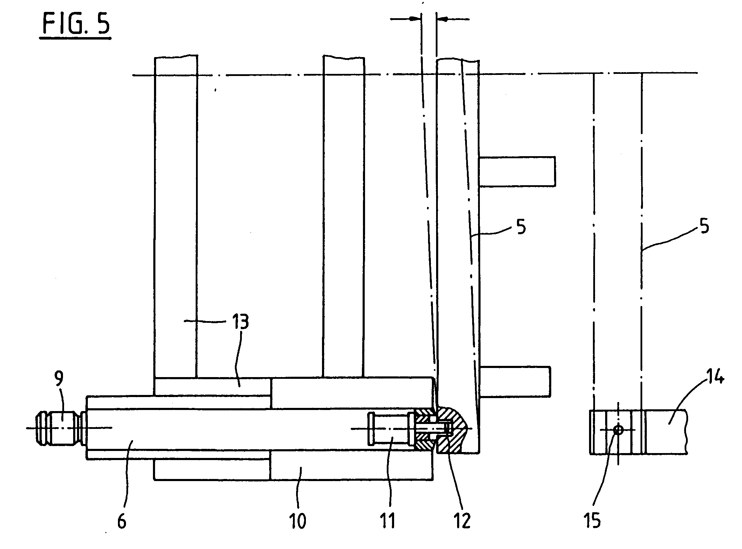

Wie Fig. 1 und 5 verdeutlichen, hängt der Spannrahmen (5) in der zurückgezogenen Position an den Zustellschlitten (6,7). In der vorgeschobenen Position an der Arbeitsstelle (29) ist eine Stütze (14) angeordnet, auf der der Spannrahmen (5) zusätzlich ruht und die ihn über eine Zentriervorrichtung (15), beispielsweise einen ausfahrbaren Index, exakt positioniert. An der Stütze (14) positioniert sich auch die Palette (24) mit dem Bodenteil (23), so daß der exakte Positionsbezug zwischen den Karosserieteilen (23, 25) hergestellt ist.

Durch das Gestell (13) sind die Zustellschlitten (6,7) mit Abstand oberhalb des Bodens und oberhalb des Sockels der Bearbeitungsvorrichtung (3) angeordnet. Sie befinden sich dadurch genau in Arbeitshöhe zur Karosserie (22). Die Zustellschlitten (6,7) bewegen sich damit auch in Höhe der Schwinge bzw. des Auslegers der Schweißroboter (3).

Jeder Zustellvorrichtung (4) ist im gezeigten Ausführungsbeispiel jeweils ein Magazin (16) mit zwei verschiedenen Spannrahmen (5) zugeordnet. Das Magazin (16) stellt zugleich die Wechselvorrichtung dar, mit der die Spannrahmen (5) in Ruhe- und Arbeitsstellung gebracht werden können. Wie Fig. 1 und 2 verdeutlichen, besteht das Magazin (16) aus einem Hubportal (18), an dessen vertikalen Säulen ein Hubschlitten (19) auf und ab beweglich ist. Im Hubschlitten (19) sind die Spannrahmen (5) übereinander gehalten und dabei jeweils lösbar befestigt.

Gemäß Fig. 2 können die Hubschlitten (19) zwischen einer oberen und einer unteren Stellung hin und her bewegt werden. In Fig. 2 ist die untere Stellung mit ausgezogenen Strichen dargestellt. In dieser Stellung befindet sich der obere Spannrahmen (5) in der Arbeitsposition und kann von der Zustellvorrichtung (4) zur Arbeitsstelle (29) bewegt werden. Die Höhe des Gestells (13) ist hierbei entsprechend auf die Spannrahmenhöhe bzw. die Spannrahmenposition im Hubschlitten (19) abgestimmt.

Der untere Spannrahmen (5) befindet sich in Ruhe- oder Warteposition vor dem Gestell (13). Zwischen dem Gestell (13) und der Stütze (14) ist hierfür ein entsprechender Freiraum belassen.

In Fig. 2 ist gestrichelt die Alternativstellung des Hubschlittens (19) dargestellt. In dieser Stellung befindet sich der obere Spannrahmen (5) in Ruhe- oder Warteposition, während der untere Spannrahmen (5) die Arbeitsposition einnimmt und von der Zustellvorrichtung (4) zugestellt werden kann.

Die vertikalen Pfosten des Hubportales (18) und der Hubschlitten (19) befinden sich mit etwas Abstand neben den Zustellschlitten (6,7), so daß letztere durch das Hubportal (18) hindurchtreten können. Am Hubschlitten (19) sind beidseits jeweils zwei nach innen ragende horizontale Tragbolzen (20) befestigt, die in eine hinterschnittene Aufnahme (21) an den Seitenrändern des Spannrahmens (5) greifen. Die nutenförmigen Aufnahmen (21) sind zu den Zustellschlitten (6,7) hin offen.

Sobald die Zustellschlitten (6,7) den Spannrahmen (5) mit den Spannvorrichtungen (11) übernommen haben, fährt der Hubschlitten (19) ein kleines Stück nach unten, bis die Tragbolzen (20) in den horizontalen Teil der Aufnahme (21) gelangen. In dieser Stellung können die Zustellschlitten (6,7) den Spannrahmen (5) aus dem Eingriff mit den Tragbolzen (20) schieben, vom Hubschlitten (19) abnehmen und zur Arbeitsstelle (29) zustellen.

Zum Wechsel des Spannrahmens (5) wird dieser wieder zurückgezogen und mit den Aufnahmen (21) über die Tragbolzen (20) gezogen. Anschließend wird der Hubschlitten (19) ein kleines Stück angehoben und bringt die Tragbolzen (20) in Eingriff mit der Hinterschneidung der Aufnahmen (21). Der Spannrahmen (5) hängt dann im Hubportal (18). Die Hubbewegung ist dabei so groß, daß auch die hakenförmigen Bolzen der Spannvorrichtungen (11) aus dem formschlüssigen Eingriff mit den Hinterschneidungen der Nuten (12) gelangen. Sie können dann zurückgezogen werden, wodurch der Spannrahmen (5) von den Zustellschlitten (6,7) gelöst wird. Durch eine Hub- oder Senkbewegung des Hubschlittens (19) wird dann der Spannrahmen (5) gewechselt. Der neue Spannrahmen (5) wird in einem umgekehrten Bewegungsablauf zunächst von den Spannvorrichtungen (11) übernommen und dann von den Tragbolzen (20) der Hubschlitten (19) freigegeben.

Wie Fig. 5 verdeutlicht, kann der Spannrahmen (5) sich beim Vorschub der Zustellvorrichtung (4) etwas schrägstellen, wenn kein exakter Gleichlauf der Zustellschlitten (6,7) gegeben ist. Die Spannvorrichtungen (11) am einen Zustellschlitten (7) greifen mit ihren Bolzen mit geringem seitlichen Spiel in die Nuten (12). Am anderen Zustellschlitten (6) ist hingegen ein größeres Eingriffsspiel vorgesehen. Der Spannrahmen (5) ist dadurch an einem der Zustellschlitten (6,7) in seiner Längsrichtung mit Formschluß relativ genau geführt.

Wie in Fig. 1 dargestellt, kann eine Seitenteilzuführung in die Bearbeitungsstation (1) vorgesehen sein. Zu diesem Zweck ist zumindest im Stationsbereich längs und oberhalb der Transferlinie (2) eine Transportvorrichtung (26), beispielsweise in Form einer Einschienenhängebahn, angeordnet. Die Transportvorrichtung (26) besitzt eine Hebevorrichtung (28), an der ein U-förmiger Seitenteilträger (27) hängt. Der Seitenteilträger (27) transportiert zwei seitenteile (25), die in Aufnahmen an seinen beiden vertikalen Schenkeln gehalten sind. In der abgesenkten Stellung übergreift der Seitenteilträger (27) bügelförmig die Palette (24) mit dem Bodenteil (23). Zur exakten Positionierung kann er sich an den Stützen (14) zentrieren.

Fig. 1 zeigt mit gestrichelten Linien die angehobene Position der Transportvorrichtung (26) mit leerem Seitenteilträger (27). Mit durchgezogenen Strichen ist die abgesenkte Position und Übergabestellung gezeichnet. In dieser Stellung befinden sich die beiden Seitenteile (25) ziemlich genau in Arbeitshöhe und können von den beidseits zugestellten Spannrahmen (5) übernommen werden. Anschließend fahren die Zustellvorrichtungen (4) wieder ein Stück zurück und geben den Seitenteilträger (27) frei, der angehoben und aus der Bearbeitungsstation (1) wieder entfernt wird. Mit einer erneuten Zustellbewegung werden die Spannrahmen (5) mit den Seitenteilen (25) in Schweißposition an der Arbeitsstelle (29) gebracht.

Zusätzlich können in die Bearbeitungsstation (1) auch Dachteile gebracht und an die Karosserie (22) angefügt werden. Hierzu kann man sich bei entsprechender Gestaltung der vorhandenen Transportvorrichtung (26) bedienen.

In Abwandlung des gezeigten Ausführungsbeispiels kann ein anderes Magazin zum Einsatz kommen. Umgekehrt läßt sich das gezeigte Magazin (16) auch mit anderen Zustellvorrichtungen (4) kombinieren. Desgleichen kann auch die Seitenteilzuführung bei anderen Bauformen der Bearbeitungsstation, insbesondere anderen Magazinen und/oder Zustellvorrichtungen Verwendung finden.

### BEZUGSZEICHENLISTE

- 1: Bearbeitungsstation
- 2: Transferlinie
- 3: Bearbeitungsvorrichtung, Roboter
- 4: Zustellvorrichtung
- 5: Spannrahmen
- 6: Zustellschlitten
- 7: Zustellschlitten
- 8: Tragsäule
- 9: Antrieb
- 10: Führung
- 11: Spannvorrichtung
- 12: Nut, Spannöffnung
- 13: Gestell
- 14: Stütze
- 15: Zentriervorrichtung
- 16: Magazin, Wechselvorrichtung
- 18: Hubportal
- 19: Hubschlitten
- 20: Tragbolzen
- 21: Aufnahme
- 22: Karosserie
- 23: Bodenteil
- 24: Palette
- 25: Seitenteil
- 26: Transportvorrichtung
- 27: Seitenteilträger
- 28: Hebevorrichtung
- 29: Arbeitsstelle
- 30: Förderer
- 31: Konsolroboter
- 32: Stationsgestell

## Patentansprüche

1. Bearbeitungsstation für Fahrzeugkarosserien in einer Transferlinie, wobei die Bearbeitungsstation (1) ein oder mehrere Bearbeitungsvorrichtungen (3), insbesondere Industrieroboter, und mindestens eine Zustellvorichtung (4) für einen Spannrahmen (5) aufweist, dadurch **gekennzeichnet**, daß die Zustellvorrichtung (4) mehrere eigenständige und mit eigenen Antrieben (9) versehene Zustellschlitten (6,7) aufweist, die beidseits der Bearbeitungsvorrichtung (3) angeordnet sind und gemeinsam einen Spannrahmen (5) aufnehmen, wobei die Zustellschlitten (6,7) bei der Zustellung im wesentlichen mit Gleichlauf und relativ zur Bearbeitungsvorrichtung (3) sowie quer zur Transferlinie (2) beweglich sind.

2. Bearbeitungsstation nach Anspruch 1, dadurch **gekennzeichnet**, daß jeder Zustellschlitten (6,7) eine Tragsäule (8) mit einer Spannvorrichtung (11) aufweist.

3. Bearbeitungsstation nach Anspruch 1 oder 2, dadurch **gekennzeichnet**, daß die Antriebe (9) der Zustellschlitten (6,7) elektrisch gekoppelt oder synchronisiert sind.

4. Bearbeitungsstation nach Anspruch 1, 2 oder 3, dadurch **gekennzeichnet**, daß bei den Zustellschlitten (6,7) ein Magazin (16) für Spannrahmen (5) angeordnet ist, das einen Hubschlitten (19) zur Aufnahme von zwei oder mehr Spannrahmen (5) aufweist.

5. Bearbeitungsstation nach Anspruch 1 oder einem der folgenden, dadurch **gekennzeichnet**, daß die Zustellschlitten (6,7) auf einem Gestell (13) mit Distanz über dem Boden und dem Sockel der Bearbeitungsvorrichtung (3) angeordnet sind.

6. Bearbeitungsstation nach Anspruch 5, dadurch **gekennzeichnet**, daß die Zustellschlitten (6,7) sich in einer Höhe oberhalb des unteren Spannrahmens (5) im Hubschlitten (19) befinden.

7. Bearbeitungsstation nach Anspruch 1 oder einem der folgenden, dadurch **gekennzeichnet**, daß oberhalb der Transferlinie (2) eine Transportvorrichtung (26) angeordnet ist, mit der Seitenteile (25) der Fahrzeugkarosserie (22) an der Arbeitsstelle (29) zugeführt werden.

8. Bearbeitungsstation nach Anspruch 7, dadurch **gekennzeichnet**, daß die Transportvorrichtung (26) eine Hebevorrichtung (28) und einen bügelförmigen Seitenteilträger (27) aufweist.

## Claims

1. A machining station for motor vehicle bodywork in a transfer line, the machining station (1) having one or more machining devices (3), in particular industrial robots, and at least one feed device (4) for a clamping frame (5), characterized in that the feed device (4) has a plurality of independent feed carriages (6, 7), provided with their own drives (9), the feed carriages being arranged on both sides of the machining device (3) and together receiving a clamping frame (5), the feed carriages (6, 7) being movable during feeding relative to the machining device (3) such that they are substantially synchronous therewith and transversely in relation to the transfer line (2).

2. A machining station according to Claim 1, characterized in that each feeding carriage (6, 7) has a supporting column (8) with a clamping device (11).

3. A machining station according to Claim 1 or 2, characterized in that the drives (9) of the feed carriages (6, 7) are electrically coupled or synchronized.

4. A machining station according to Claim 1, 2 or 3, characterized in that a mounting rack (16) for clamping frames (5) is arranged near to the feed carriages (6, 7), this mounting rack (16) having a lifting carriage (19) for receiving two or more clamping frames (5).

5. A machining station according to Claim 1 or one of the following claims, characterized in that the feed carriages (6, 7) are arranged on a framework (13) such that there is space above the floor and the base of the machining device (3).

6. A machining station according to Claim 5, characterized in that the feed carriages (6, 7) are located on a level above the lower clamping frame (5) in the lifting carriage (19).

7. A machining station according to Claim 1 or one of the following claims, characterized in that there is arranged above the transfer line (2) a transport device (26) which supplies side parts (25) of the motor vehicle bodywork (22) to the operating area (29).

8. A machining station according to Claim 7, characterized in that the transport device (26) has a lifting device (28) and a bracket-shaped side part support (27).

## Revendications

1. Poste d'usinage de carrosseries de véhicules dans une chaîne de production, dans lequel le poste d'usinage (1) présente un ou plusieurs dispositifs d'usinage (3), en particulier des robots industriels, et au moins un dispositif d'avance (4) d'un cadre de serrage (5), caractérisé en ce que le dispositif d'avance (4) comporte plusieurs chariots d'avance (6, 7) autonomes et pourvus de leur propre dispositif d'entraînement (9), qui sont disposés des deux côtés du dispositif d'usinage (3) et reçoivent ensemble un cadre de serrage (5), les chariots d'avance (6, 7) étant mobiles, lors de l'avance, essentiellement avec synchronisme et relativement au dispositif d'usinage (3) ainsi que transversalement à la chaîne de production (2).

2. Poste d'usinage selon la revendication 1, caractérisé en ce que chaque chariot d'avance (6, 7) comporte une potence (8) ayant un dispositif de serrage (11).

3. Poste d'usinage selon la revendication 1 ou 2, caractérisé en ce que les dispositifs d'entraînement (9) des chariots d'avance (6, 7) sont couplés électriquement ou synchronisés.

4. Poste d'usinage selon la revendication 1, 2 ou 3, caractérisé en ce que dans les chariots d'avance (6, 7) est disposé un magasin (16) pour cadre de serrage (5), qui présente un chariot de levage (19) destiné à recevoir deux ou plusieurs cadres de serrage (5).

5. Poste d'usinage selon la revendication 1 ou l'une des suivantes, caractérisé en ce que les chariots d'avance (6, 7) sont disposés sur un bâti (13) à distance au-dessus du sol et de l'embase du dispositif d'usinage (3).

6. Poste d'usinage selon la revendication 5, caractérisé en ce que les chariots d'avance (6, 7) se trouvent à un niveau au-dessus du cadre de serrage (5) inférieur dans le chariot de levage (19).

7. Poste d'usinage selon la revendication 1 ou l'une des suivantes, caractérisé en ce que au-dessus de la chaîne de production (2) est disposé un dispositif de transport (26), par lequel des parties latérales (25) de la carrosserie de véhicule (22) sont amenées au poste de travail (29).

8. Poste d'usinage selon la revendication 7, caractérisé en ce que le dispositif de transport (26) comporte un dispositif de levage (28) et un support de partie latérale (27) en étrier.
